## Europäisches Patentamt
## European Patent Office
## Office européen des brevets

(19)

(11) Publication number: **0 059 220**

**A1**

(12)

# EUROPEAN PATENT APPLICATION
published in accordance with Art. 158(3) EPC

(21) Application number: **81902249.2**

(22) Date of filing: **14.08.81**

Data of the international application taken as a basis:

(86) International application number:
**PCT/JP81/00177**

(87) International publication number:
**WO82/00890 (18.03.82 82/08)**

(51) Int. Cl.³: **G 01 N 1/06**
**C 04 B 41/00, B 26 D 1/00**

(30) Priority: **03.09.80 JP 121979/80**

(43) Date of publication of application:
**08.09.82 Bulletin 82/36**

(84) Designated Contracting States:
**CH DE FR GB LI**

(71) Applicant: **SHINKOSHA CO.,LTD.**
**8-8, Ginza 4-chome Chuo-ku**
**Tokyo 104(JP)**

(72) Inventor: **FUKUZAKI, Tadao**
**7, Nakano-cho Totsuka-ku**
**Yokohama-shi Kanagawa 247(JP)**

(72) Inventor: **FUJISAWA, Tadahiko**
**15, Imaikami-machi, 7-chome Nakahara-ku**
**Kawasaki-shi Kanagawa 211(JP)**

(72) Inventor: **KASAI, Hiromu**
**15-14, Dai 4-chome Kamakura-shi**
**Kanagawa 247(JP)**

(74) Representative: **Blumbach Weser Bergen Kramer**
**Zwirner Hoffmann Patentanwälte**
**Radeckestrasse 43**
**D-8000 München 60(DE)**

(54) **ULTRAMICROTOME KNIFE OF ALPHA-ALUMINA SINGLE CRYSTAL.**

(57) An ultramicrotome knife made from an α-alumina single crystal, which can cut out several hundred or more ultra-thin pieces having no flaws inhibiting observation under an electron microscope. This knife is composed of an α-alumina single crystal having a blade with substantially no chips on the cutting edge detectable by observation under a microscope with a magnification of 800X or more. This knife is manufactured by mechanical abrasion and/or mechanical-chemical abrasion of the two sides forming the edge, and then chemical polishing until substantially no chips detectable by observation under a microscope with a magnification of 800X or more remain.

*FIG. 1*

Description

Knife for ultramicrotomy of α-alumina single crystal

## Technical Field

This invention relates to a knife for microtomy, especially ultramicrotomy of α-alumina single crystal and the process for producing the same.

## Background Art

Knives for ultramicrotomy are knives used for slicing off ultrathin sections suitable for electron microscopy from substances such as organic tissues and others. These ultrathin sections are required to have a thickness ranging from about 500 Å to about 1000 Å and to have no knife mark in such a size as may interfere the electron microscopy thereof.

Diamond knives or glass knives have been used heretofore as the knives for ultramicrotomy. But, both knives have the following problems. The diamond knives are not only very expensive, but also are hardly available, because a peculiar skill and knowhow are required for persons to make them, and the skill and knowhow have been kept in secret, so that very few persons have made them in the world. On the other hand, glass knives are cheaper in terms of material, but are questionable in terms of the sharpness and durability of

- 2 -

0059220

the edge.  The probability that the glass knife just made will have a good sharpness is not so large and whether the sharpness is good or not can be found only by the slicing test after being made, and even the sharpness of the knife successfully made always deteriorates after several times of slicings.  Accordingly, glass knives must be made everytime the slicing and the electron microscopy of sections are going to be carried out.  Both knives have such big problems.

We have investigated for producing a knife good enough for ultramicrotomy of α-alumina single crystal which would not have been made successfully and not have been on market.

We have now succeeded in making a knife of α-alumina single crystal whose edge is so sharp and so smooth as to be able to slice off sections which are suitable for electron microscopy because of the ultrathiness of the sections and the absence of knife marks in such a size as may interfere the electron microscopy on the sections, and whose edge is so durable as to be able to keep its initial sharpness and smoothness even after slicings of several hundreds times or more.  This invention is based on the success.

## Disclosure of Invention

This invention relates to a knife for ultramicrotomy of α-alumina single crystal capable of slicing off, at least several hundreds times with no trouble, ultrathin sections suitable for electron microscopy which have no knife mark in such a size as may interfere the electron microscopy which comprises a block of α-alumina single crystal having an edge formed at the intersecting end of two faces, the edge having substantially no flaw detectable by the microscopy of at least about 800 magnifications.

This invention also relates to a process for producing a knife for ultramicrotomy of α-alumina single crystal capable of slicing off, at least several hundreds times with no trouble, ultrathin sections suitable for electron microscopy which have no knife mark in such a size may interfere the electron microscopy which comprises cutting off a parallelepiped block from a boule of α-alumina single crystal, grinding out a face intersecting to one side face of the parallelepiped in an appropriate angle to form an edge at the intersecting end of the two faces, subjecting the two faces to a mechanical polishing and/or a mechanochemical polishing, and then subjecting the resulting two faces to a chemical polishing until the edge becomes to have substantially no flaw detectable by the microscopy of at least about 800 magnifications on the whole edgeline.

This invention further relates to a process for reproducing the knife for ultramicrotomy of α-alumina single crystal which comprises subjecting the knife whose edge got so unsharp and unsmooth as to be unable to slice off ultrathin sections suitable for ultramicroscopy after lots of slicings to a chemical polishing until the edge becomes to have substantially no flaw detectable by the microscopy of at least about 800 magnifications on the whole edgeline.

Brief Description of Drawings

FIG. 1 is an enlarged perspective view of the knife of this invention.

FIG. 2(A) is a microscopic view (1300 magnifications) of the edge of the knife which has flaws and FIG. 2(B) is a microscopic view (1300 magnifications) for showing knife marks existing on the section which was sliced off by the microtomy using the knife of FIG. 2(A).

FIG. 3(A) is a microscopic view (1300 magnifications) of the edge of the knife which has no flaw, FIG. 3(B) is a microscopic view (1300 magnifications) showing no knife mark existing on the section which was sliced off by the microtomy using the knife of FIG. 3(A), and FIG. 3(C) is an electron microscopic view using HITACHI Electron Microscope HU-12A (2000 magnifications) of the section obtained by slicing from a dog's myocardium embedded in an epoxy resin by the ultramicrotomy using the knife of FIG. 3(A).

FIG. 4 is a microscopic view in dark visual field (1300 magnifications) showing scratches on the surface of α-alumina single crystal which was subjected to a mechanical polishing.

FIG. 5 is a microscopic view (1300 magnifications) for showing the relationship between etch-pits (dislocation defects) and flaws existing on the edge of the knife; (A) of FIG. 5 is a microscopic view of the edge having big flaws mechanically produced of a knife which was made from α-alumina single crystal with a poor quality, (B) and (C) of FIG. 5 are respectively a microscopic view of the knife which was made from α-alumina single crystal with a relatively high quality.

Best Mode of Carrying Out the Invention

The knife of this invention is a knife for ultra-microtomy of α-alumina single crystal which comprises having substantially no flaw detectable by the microscopy of at least about 800 magnifications on the whole edgeline formed at the intersecting end of two faces.

The knife of this invention can be also naturally used as the knife for microtome which is the instrument for slicing off sections for usual optical microscopy.

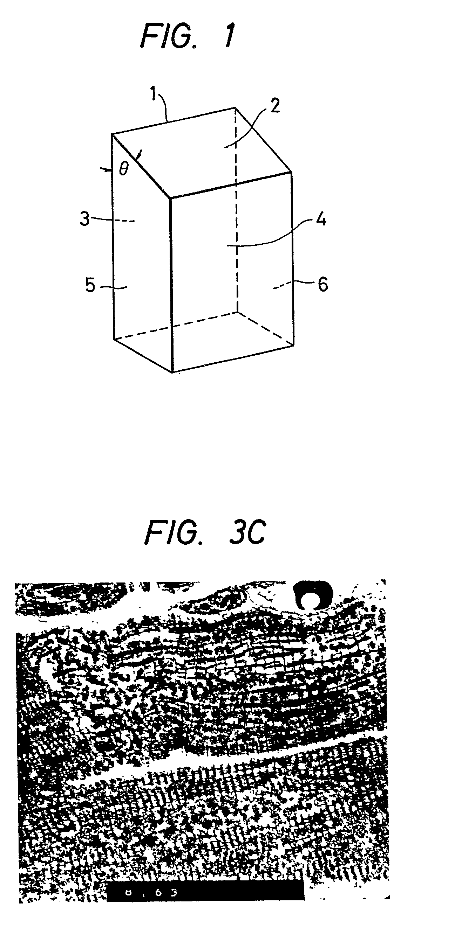

FIG. 1 is an enlarged perspective view of the knife of this invention. In FIG. 1, 1 is an edgeline. 2 and 3 are the two faces which form edgeline 1.  θ is an angle included by face 2 and face 3.  3 and 4 are faces parallel to edgeline 1.  5 and 6 are faces perpendicualr to edgeline 1.

The knife whose face 5 and face 6 are both made from face C (0001) of α-alumina single crystal is a preferable knife.

The angle included by face 2 and face 3 may be freely selected in due consideration of the sufficient sharpness and durability of the edge.  The edge whose angle is too small is inferior in its durability, and the edge whose angle is too large is inferior in its sharpness.  The reliable angle is an angle ranging from 10° to 70°, although an angle not larger than 10° can also be used.

The roundness, i.e., the radius of curvature of the very edge has a close relationship to the sharpness and durability of the edge, but is difficult to measure correctly. Accordingly, the range of the radius of curvature of the very edge which is necessary and sufficient can be hardly limited, but it is not so difficult practically to produce the knife whose edge has a sufficient sharpness and durability.

The most important thing is that the knife has no flaw which gives, to the sections sliced off by the knife, knife mark of such a kind as may substantially interfere the electron microscopy of the section.

Many knives had been made, many sections had been sliced off by the ultramicrotome with the knives, and the edges of the knives had been observed by means of optical microscopes of various magnifications, and the sections had been observed by means of an electron microscope, so that it has been found that the presence of the flaw on the edge which gives the intolerable knife mark to the section can be reliably confirmed merely by the observation of the edge of the knife by means of an optical microscope of at least about 800 magnifications. It seems to be rather surprising that the simple investigation such as an optical microscopic observation of at least about 800 magnifications makes it possible to find whether the knife has the edge or not which gives no knife mark intolerable in the electron microscopic observation to the sections sliced off by the knife. This invention is based on this discovery.

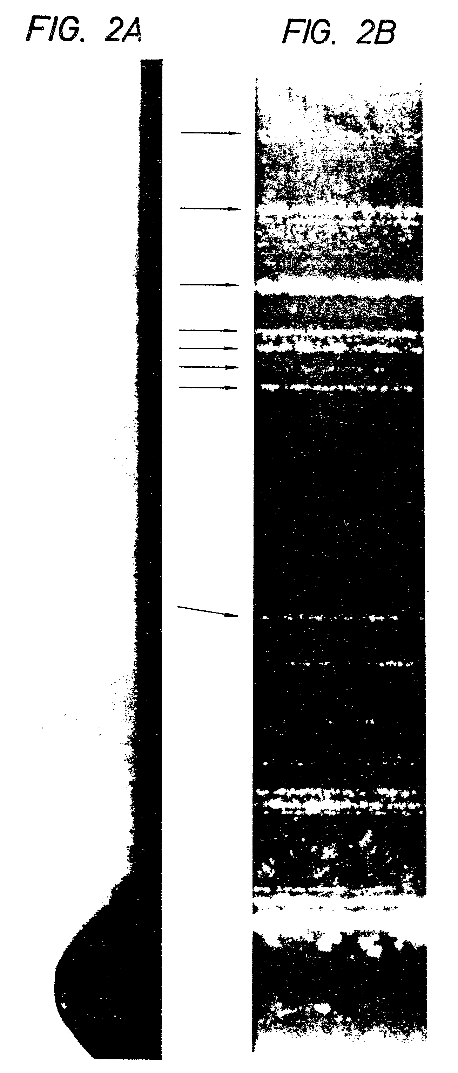

FIG. 2(A) shows a microscopic view (1300 magnifications) of an edge having flaws of a knife, and FIG. 2(B) is a microscopic view (1300 magnifications) showing knife marks on the section sliced off by the microtome with the knife. The knife is shown by the white part in FIG. 2(A). It will be understood that the positions of flaws of the edge in FIG. 2(A) are in a good correspondence with the positions of knife marks in FIG. 2(B).

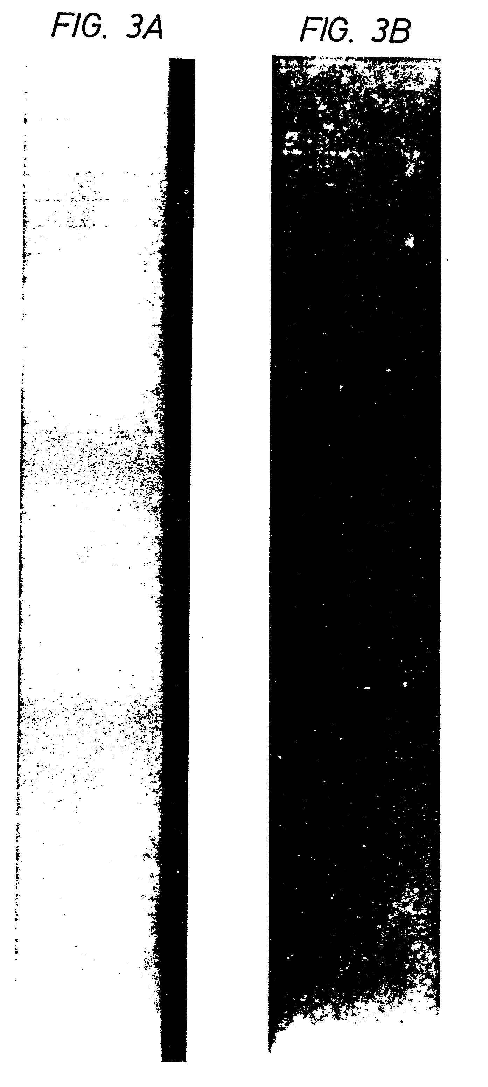

FIG. 3(A) is a microscopic view (1300 magnifications) of the edge on which no substantial flaw can be seen, and FIG. 3(B) is a microscopic view (1300 magnifications) of the section sliced off by the microtome using the knife, the section having no knife mark. The electron microscopic view (2000 magnifications) of the section which was sliced off by the ultramicrotome using the knife of FIG. 3(A) is shown in FIG. 3(C). It was confirmed by many electron microscopic views (1000 - 50,000 magnifications) of many sections sliced off by the knife of FIG. 3(A) that the knife gives no knife mark intolerable in the electron microscopy to the ultrathin sections.

What it means in this invention that the edge of the knife has substantially no flaw includes not only the case that there can not be found even one flaw on the whole edgeline as seen in FIG.3(A), but also the case that there is no flaw on a distance considerably longer than 1.0 mm, but very few flaws on the whole edgeline, because the size of ordinary ultrathin sections for electron microscopy is smaller than one square milimeter, so that the sections with no knife mark can be sliced off by the portion having no flaw of the edge of such a knife as having very few flaws.

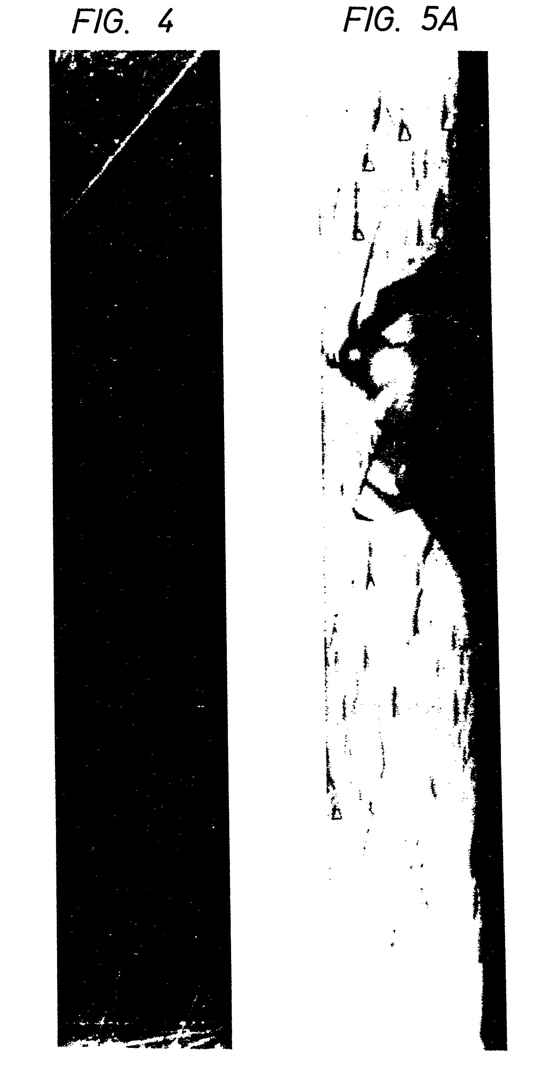

The knife for ultramicrotomy of this invention is produced in the following way. As is shown in FIG. 1, a rectangular parallelepiped block in an appropriate size such as 5 x 4 x 10 mm is cut off from a boule of α-alumina single crystal, and face 2 is ground out with a grinder having fine powdered diamond on the surface to make edge 1. Then face 3 and face 2 are subjected to a mechanical polishing with fine powdered diamond. The mechanical polishing is enough to polish up jewels of sapphire, but the surface obtained by only the mechanical polishing has lots of scratches as seen in the microscopic view in dark visual ground (1300 magnifications) of FIG. 4. Such a mechanical polishing produces a lot of flaws on the edgeline 1 of the knife, which can not be practically used as the knife for ultramicrotomy, and also produces a strain layer on the polished surface. If the surface after mechanical polishing is further subjected to the mechanochemical polishing such as using a disperse solution of colloidal silica, a chemical reaction of the alumina of the polished surface with the colloidal silica gives rise to produce a mullite layer on the surface, after which the mullite layer is mechanically removed, so that a considerably smooth surface of alumina is produced. This surface is the surface which has very few flaws detectable by microscopy and has a very decreased strain layer. However, the probability that such a mechanochemical polishing gives a knife for ultramicrotomy capable of slicing off ultrathin section having no knife mark is not zero, but is not very large.

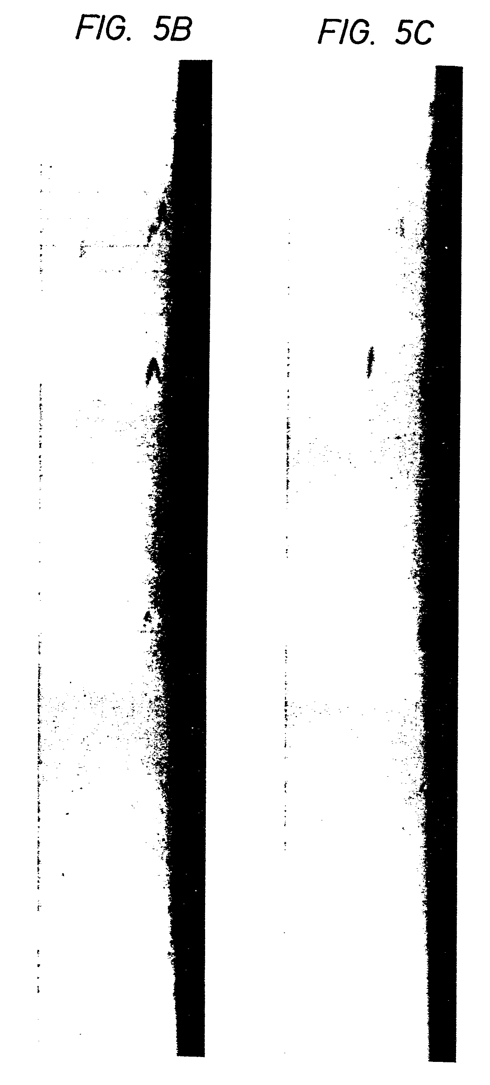

The two faces forming the edge of the knife after the mechanochemical polishing is further subjected to a so-called chemical polishing to dissolve and remove a surface layer, so that the flaws in the form of an acute triangle as seen in FIG. 2(A) still existing on the edgeline are gradually eliminated with the dissolution of the part closing to the edgeline, so that the acute flaws gradually change to a gently-sloping concave form and finally disappear to produce a truly smooth edgeline having no flaw as seen in FIG.3(A). However, the flaws on the edgeline are not only eliminated, but also may appear in continuation of the chemical polishing. This reason is illustrated as follows. α-Alumina single crystal has ordinarily some micro defects such as so-called dislocation defects as well as macro defect such as foam, misorientation, linage, or striae. The macro defect of course gives a big flaw on the edgeline, but the micro defect also gives a small but acute triangle flaw on the edgeline. The microscopic views (1300 magnifications) in FIG. 5(A), (B) and (C) show a clear correspondence between the triangle flaws on the edgeline and the etch-pits representing dislocation defects existing on the faces forming the edge. Accordingly, it is preferable to employ α-alumina single crystal having microdefects as few as possible as well as very few macrodefects. This is because the continuation of chemical polishing to the knife of α-alumina single crystal having many microdefects may not only eliminate the flaws existing on the edgeline, but also may reproduce new flaws based on the microdefects such as the etch-pits in the single crystal, so that the probability that the knife having no flaw on the edgeline can be obtained by chemical polishing decreases, and the yield of good knife decreases. Therefore it is preferable that α-alumina single crystal is produced from alumina having a purity as high as possible by a method for growing a single crystal boule having an etch-pits density (dislocations density) as low as possible, and the part having defects and internal strain as small as possible is selected from the resulting boule so as to use the part as the starting material of knife. From this point of view, so-called Czochralski method, Heat Exchange method, or Bagdasarov method which was developed in serious consideration of decreasing internal defects for the use in the field of electronics is preferably employed than Verneuil's method which was mainly developed for the mass-production of sapphire for jewels or bearings. Therefore α-alumina single crystal which is carefully produced by one of the former methods from pure alumina is preferable as the starting material of the knife.

It has also been found that the edgeline which is not parallel to C-axis of the α-alumina single crystal is liable to get many defects thereon in the chemical polishing thereof; accordingly the knife whose side faces perpendicular to the edgeline are both the face C of the α-alumina single crystal is a preferable knife.

Two faces forming the edgeline are not necessarily required to be faces with Miller indices of small integers, but may be, or are rather preferable to be both faces with Miller indices of small integers such as face mm (60°), face aa (60°), or face ma (30°), provided m : $\{10\bar{1}0\}$, a : $\{1\bar{2}10\}$. The two faces may also be formed of one face with Miller indices of small integers and another face with Miller indices of not small integers, and may be formed of both faces with Miller indices of not small integers.

The mechanical polishing used in this invention may be conventional one using fine powdered diamond, and the mechanochemical polishing may be conventional one using colloidal silica, but both are not necessarily limited to those. The chemical polishing in this invention can be effected by using a chemical polishing agent which can dissolve α-alumina single crystal with an appropriate velocity. The chemical polishing agent may be almost of the agents which have the said ability, and is, for example, a hot

aqueous solution of $H_3PO_4$, KOH, $KHSO_4$, or the mixture of $H_2SO_4$ and $H_3PO_4$. For example, immersing the knife in a concentrated solution of orthophosphoric acid at a temperature of 200 - 500°C, more concretely in the solution of $H_3PO_4$ in a conc. of 88 wt.% at 340°C for 10 minutes can be practically employed.

Mechanical polishing and mechanochemical polishing are carried out by rotating the crystal block to be polished on the lap made of an appropriate material coated with an appropriate polishing agent so as to polish up the faces of the crystal block. The face 3 of FIG. 1 can be easily polished because there is face 4 parallel to face 3. But polishing face 2 is generally carried out so that a number of knife blocks are first connected with an adhesive in succession of face 3 face 4 face 3 face 4 ..... to form a large plane surface with the connection of each face 2 of the blocks, and the large flat plane surface is polished on a lap. In this case, the adhesive layer between face 3 and face 4 is preferable to be as thin as possible, otherwise the edge is polished in such a big roundness as be unable to slice off ultrathin section, because the soft adhesive layer is firstly removed with hard polishing powder and then the edge is rounded off with hard polishing powder from the layer space. In this sense, the preferable thickness of the adhesive layer is

0059220

less than 20 µ.

The knife which got flaws on the edgeline and/or got blunt after lots of slicings of ultrathin sections can be ordinarilly restored to the knife having a good quality for ultramicrotomy by means of only a chemical polishing without mechanical and mechanochemical polishing. Of course there will be some case the knife is given so large flaw that mechanochemical and/or mechanical polishing are required to the restoration. These facts that chemical polishing enables to decrease the flaws which could not be removed by the mechanochemical and/or mechanical polishing and enables to keep the good sharpness for ultramicrotomy without excessive increase of roundness of the edge, that the restoration of the knife deteriorated after losts of slicings is possible in many cases only by the chemical polishing, and that dislocation defects of α-alumina single crystal make flaws on the edgeline of the knife, seem to be new discoveries.

This invention is based on the discoveries.

Example 1

A boule of a high quality single crystal of sapphire whose etch-pits density is $2 \times 10^3/cm^2$ was produced by Bagdasarov method. The boule was cut to make a rectangular parallelepiped block of 5 x 4 x 10 cm whose two parallel side faces are face c and face m of the single crystal. The block

- 15 -

0059220

was ground to make a knife whose edgeline is formed by the intersecting termination of the said side face m and another face m of the single crystal, thereby the angle included by the two faces m, m being 60°. The two faces m,m were polished with fine powdered diamond in a diameter of 3 - 8 μ, and then with fine powdered diamond in a dia. of 1/2 - 3 μ, on a lap-board. The resulting one was polished with an alkali solution of colloidal silica whose diameter is 300 - 400 Å on a lap-board whose surface is made of a polyurethane sponge pad. In these polishing, the side face m was polished every one block, but the other face m which is the slanting face of the parallelepiped block was polished after three blocks were adhered with every face m so as to make a flat plane consisting of the three slanting faces. The thickness of every adhesive layer was about one micron. The adhesive layer thicker than 1 μ may make a round dull edge in the polishing with fine powdered diamond. The resulting one was subjected to a mechanochemical polishing with colloidal silica, and then was treated with a solvent to dissolve the adhesive layers, so that three block were separated one another. Every block was subjected to a chemical polishing in an aqueous solution of $H_3PO_4$ in a concentration of 88 wt.% at 320°C for about 10 minutes. The resulting one was well washed and dried, and observed by an optical microscope of 800 magnifications, but no flaw was found on the edgeline. The resulting knife was attached to a ultramicrotome (Reichert Ultracut OmU4), and was used to slice off sections from an organic tissue embedded in an epoxy resin, so that ultrathin sections with a thickness of so-called silver (about 600 Å) were obtained. The knife has kept its initial sharpness and did not make any knife mark on the section sliced after successive slicings of 600 times.

Example 2

A knife was made in the same manner as in Example 1 except that the two faces forming the edgeline of the knife were face m (side face) and face a (slanting face), the angle included by face m and face a is 30°. This knife showed the same result as in Example 1 in slicing ultrathin sections.

Example 3

A knife was made in the same manner as in Example 1 except that the two faces forming the edgeline of the knife were face a and face a, and the angle included by the two faces a, a is 60°. This knife showed the same result as in Example 1 in slicing ultrathin sections.

## Claims

(1)    A knife for ultramicrotomy which comprises a knife of α-alumina single crystal having an edge formed at the intersecting end of two faces, the edge having substantially no flaw detectable by the microscopy of at least about 800 magnifications on the whole edgeline.

(2)    A knife for ultramicrotomy as claimed in Claim 1, wherein face C (0001) (of the α-alumina single crystal) forms both side faces perpendicular to the edgeline of the knife.

(3)    A knife for ultramicrotomy as claimed in Claim 1 or 2, wherein the angle included by the two faces forming the edgeline is an angle in the range of 10° to 70°.

(4)    A knife for ultramicrotomy as claimed in Claim 1 or 3, wherein the two faces forming the edgeline are faces mm, faces aa, or faces ma (of the α-alumina single crystal).

(5)    A process for producing a knife for ultramicrotomy which comprises cutting off a parallelepiped block (from a boule) of α-alumina single crystal, grinding out a face intersecting to one side face of the parallelepiped in an appropriate angle to form an edge at the intersecting end of the two faces, subjecting the two faces to a mechanical polishing and/or a mechanochemical polishing, and then subjecting the resulting two faces to a chemical polishing until the edge becomes to have substantially no flaw detectable by the microscopy of at least about 800 magnifications on the whole edgeline.

(6)    A process for producing a knife for ultramicrotomy as claimed in Claim 5, wherein face C (of the α-alumina single crystal) is used as a pair of side faces which are perpendicular to the edgeline.

(7)    A process for producing a knife for ultramicrotomy as claimed in Claim 5 or 6, wherein a highly qualified α-alumina single crystal having very little dislocation defects is used.

(8)    A process for producing a knife for ultramicrotomy as claimed in any of Claim 5 - 7, wherein the chemical polishing is carried out by using a concentrated aqueous solution of orthophosphoric acid at a temperature of 200 to 500°C.

(9)    A process for reproducing the knife for ultramicrotomy which comprises subjecting the knife of α-alumina single crystal having an edge formed at the intersecting end of two faces, whose edge got flaws and/or got unsharp after lots of slicings to a chemical polishing until the edge becomes to have substantially no flaw detectable by the microscopy of at least about 800 magnifications on the whole edgeline.

## FIG. 1

## FIG. 3C

FIG. 2A

FIG. 2B

0059220

FIG. 3A

FIG. 3B

0059220

FIG. 4

FIG. 5A

FIG. 5B    FIG. 5C

0059220

# INTERNATIONAL SEARCH REPORT

International Application No PCT/JP80509272 0

## I. CLASSIFICATION OF SUBJECT MATTER (if several classification symbols apply, indicate all) 3

According to International Patent Classification (IPC) or to both National Classification and IPC

Int. Cl.$^3$  G01N 1/06, C04B 41/00, B26D 1/00

## II. FIELDS SEARCHED

### Minimum Documentation Searched 4

| Classification System | Classification Symbols |
|---|---|
| I P C | G01N 1/06<br>C04B 41/00<br>B26D 1/00 |

Documentation Searched other than Minimum Documentation
to the Extent that such Documents are Included in the Fields Searched 5

| | |
|---|---|
| Jitsuyo Shinan Koho | 1926 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| X | US, A  3,834,265  1974-9-10<br><br>The Gillette Company | 1 – 9 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 2 | Date of Mailing of this International Search Report 2 |
|---|---|
| November 7, 1981 (07.11.81) | November 24, 1981 (24.11.81) |

| International Searching Authority 1 | Signature of Authorized Officer 20 |
|---|---|
| Japanese Patent Office | |

Form PCT/ISA/210 (second sheet) (October 1977)